# EUROPÄISCHE PATENTANMELDUNG

(11) **EP 3 736 556 A1**
(43) Veröffentlichungstag der Anmeldung: **11.11.2020**
(21) Anmeldenummer: 20172957.1
(22) Anmeldetag: 05.05.2020
(51) Int. Cl.: G01N 21/21, G01N 21/88, B29C 70/00, B29C 70/38, G01B 11/30, G01N 21/95, G01N 21/84

(54) **VERFAHREN UND VORRICHTUNG ZUM ERKENNEN VON OBERFLÄCHENFEHLERN**

(30) Priorität: 10.05.2019 DE 102019112317
(71) Anmelder: Deutsches Zentrum für Luft- und Raumfahrt e.V., 51147 Köln (DE)
(72) Erfinder: Meister, Sebastian, 21680 Stade (DE)
(74) Vertreter: Gramm, Lins & Partner Patent- und Rechtsanwälte PartGmbB

(57) **Zusammenfassung**

Die Erfindung betrifft ein Verfahren zum Erkennen von geometrischen Oberflächenfehlern einer Materialoberfläche, bei dem die Materialoberfläche mittels einer Erfassungsvorrichtung untersucht wird, wobei das Verfahren die folgenden Schritte umfasst:
- Emittieren einer ersten elektromagnetischen Strahlung einer ersten elektromagnetischen Strahlungsquelle der Erfassungsvorrichtung aus einer ersten Strahlungsrichtung in Richtung der Materialoberfläche,
- Emittieren wenigstens einer zweiten elektromagnetischen Strahlung einer zweiten elektromagnetischen Strahlungsquelle der Erfassungsvorrichtung aus einer von der ersten Strahlungsrichtung verschiedenen zweiten Strahlungsrichtung in Richtung der Materialoberfläche,
- wobei die elektromagnetischen Strahlungen durch ihre jeweilige Strahlungsquelle derart polarisiert werden, dass sich die Polarisation der elektromagnetischen Strahlungen voneinander unterscheiden,
- Erfassen der von der Materialoberfläche reflektierten Strahlungen mittels einer polarisationssensitiven Aufnahmesensorik und Generieren von polarisationsabhängigen Messdaten in Abhängigkeit von den erfassten reflektierten Strahlungen, und
- Analysieren der polarisationsabhängigen Messdaten mittels einer Auswerteeinheit der Erfassungsvorrichtung.

## Beschreibung

Die Erfindung betrifft ein Verfahren zum Erkennen von geometrischen Oberflächenfehlern einer Materialoberfläche, bei dem die Materialoberfläche mittels einer Erfassungsvorrichtung untersucht wird. Die Erfindung betrifft ebenso eine Vorrichtung hierzu. Ebenso von der Erfindung umfasst ist ein Verfahren zur automatisierten Faserablage von Fasermaterial eines Faserverbundwerkstoffes auf ein Werkzeug mittels einer Faserlegeanlage sowie eine diesbezügliche Faserlegeanlage.

Aufgrund der gewichtsspezifischen Festigkeit und Steifigkeit von Faserverbund-Bauteilen, die aus einem Faserverbundwerkstoff hergestellt werden, sind derartige Bauteile aus der Luft- und Raumfahrt und aus vielen weiteren Anwendungsgebieten, wie beispielsweise dem Automobilbereich, heutzutage kaum mehr wegzudenken. Bei der Herstellung eines Faserverbundbauteils wird dabei ein in ein Fasermaterial infundiertes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem in der Regel das Fasermaterial evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der
DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablegeköpfen das Ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials ab.

Faserlaminate bzw. Faserpreformen für großskaligen Strukturbauteilen, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit großem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, woraus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

So ist aus der DE 10 2013 104 546 A1 ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Es hat sich jedoch gezeigt, dass aufgrund der unterschiedlichen Resonanz verschiedener Fasermaterialien auf unterschiedlichen Wellenlängen geometrische Legefehler nicht 100 % prozesssicher erkannt werden können.

Vor diesem Hintergrund ist es Aufgabe der vorliegenden Erfindung ein verbessertes Verfahren sowie Vorrichtung zum Erkennen von geometrischen Oberflächenfehlern einer Materialoberfläche, insbesondere einer Fasermaterialoberfläche, anzugeben, mit dem unabhängig von dem Resonanzverhalten der Materialoberfläche auf unterschiedlichen Wellenlängen prozesssicher Oberflächenfehler erkannt werden können.

Die Aufgabe wird mit dem Verfahren zum Erkennen von geometrischen Oberflächenfehlern gemäß Anspruch 1, sowie der Vorrichtung zum Erkennen von geometrischen Oberflächenfehlern gemäß Anspruch 8 erfindungsgemäß gelöst. Die Aufgabe wird im Übrigen auch mit dem Verfahren zur automatisierten Faserablage von Fasermaterial eines Faserverbundwerkstoffes gemäß Anspruch 7 sowie einer diesbezüglichen Faserlegeanlage gemäß Anspruch 13 erfindungsgemäß gelöst. Vorteilhafte Ausgestaltungen der Erfindung finden sich in den entsprechenden Unteransprüchen.

Gemäß Anspruch 1 wird ein Verfahren zum Erkennen von geometrischen Oberflächenfehlern einer Materialoberfläche, beispielsweise einer Fasermaterialoberfläche, vorgeschlagen, wobei die Materialoberfläche mittels einer Erfassungsvorrichtung untersucht wird. Mithilfe der Erfassungsvorrichtung wird dabei eine erste elektromagnetische Strahlung einer ersten elektromagnetischen Strahlungsquelle aus einer ersten Strahlungsrichtung in Richtung der Materialoberfläche emittiert. Des Weiteren wird mit der Erfassungsvorrichtung erfindungsgemäß mindestens eine zweite elektromagnetische Strahlung einer zweiten elektromagnetischen Strahlungsquelle aus einer von der ersten Strahlungsrichtung verschiedenen zweiten Strahlungsrichtung in Richtung der Materialoberfläche emittiert. Die Materialoberfläche wird demzufolge aus unterschiedlichen Richtungen mit einer ersten elektromagnetischen Strahlung und wenigstens einer zweiten elektromagnetischen Strahlung bestrahlt (beleuchtet), wobei die erste elektromagnetische Strahlung unter einem Winkel auf die Fasermaterialoberfläche auf trifft, der von dem Winkel der zweiten elektromagnetischen Strahlung verschieden ist.

Erfindungsgemäß ist dabei weiterhin vorgesehen, dass die elektromagnetischen Strahlungen durch ihre jeweiligen Strahlungsquelle derart polarisiert werden, dass sich die Polarisation der elektromagnetischen Strahlung voneinander unterscheiden. Die erste elektromagnetische Strahlung wird demzufolge von der ersten elektromagnetischen Strahlungsquelle anders polarisiert, als die zweite elektromagnetische Strahlung durch die zweite elektromagnetische Strahlungsquelle polarisiert wird. Die erste elektromagnetische Strahlung weist demzufolge eine erste Polarisation auf, während die zweite elektromagnetische Strahlung eine zweite Polarisation aufweist, wobei die erste Polarisation von der zweiten Polarisation verschieden ist.

Die aufgrund der ersten und der zweiten elektromagnetischen Strahlung von der Materialoberfläche reflektierte Strahlung wird nun mittels einer polarisationssensitiven Aufnahmesensorik der Erfassungsvorrichtung erfasst bzw. aufgenommen, wobei die Aufnahmesensorik eingerichtet ist, reflektierte Strahlungen der Materialoberfläche mit der ersten Polarisation der zweiten Polarisation zu erfassen. Basierend auf der aufgenommenen, reflektierten Strahlung werden nun polarisationsabhängige Messdaten generiert, die dann zu einer weiteren Analyse einer Auswerteeinheit zugeführt werden.

Die Auswerteeinheit ist nun so eingerichtet, dass sie die polarisationsabhängigen Messdaten analysiert, wobei in Abhängigkeit von der Analyse der polarisationsabhängigen Messdaten geometrische Oberflächenfehler der Materialoberfläche erkannt werden. Die Auswerteeinheit ist demzufolge so eingerichtet, dass sie in Abhängigkeit der polarisationsabhängigen Messdaten geometrische Oberflächenfehler der Materialoberfläche erkennt.

Derartige Oberflächenfehler können beispielsweise Stufen, Überlappungen, Spalte, Verwerfungen, Welligkeiten, Fremdkörper, Materialansammlungen oder Materialfehler sein.

Durch die Variation der Polarisation der emittierten Strahlung und den verschiedenen Winkeln der Bestrahlung können die reflektierten Strahlungen bzw. Reflexionen von der Materialoberfläche eindeutig einer Strahlungsquelle zugeordnet werden, wodurch es möglich wird, geometrische Inhomogenitäten auf der Materialoberfläche prozesssicher erkennen zu können und darüber hinaus gegebenenfalls den Fehler auch zu charakterisieren.

Hierdurch können zwei vorteilhafte Effekte realisiert werden. Zum einen kann die Materialoberfläche aus zwei verschiedenen Strahlungswinkeln bestrahlt bzw. beleuchtet werden, wodurch geometrische Oberflächenfehler sehr gut detektierbar werden. Zum anderen kann die Materialoberfläche durch beide Strahlungsquellen mit der optimalen Wellenlänge bestrahlt werden, wodurch eine besonders gute Reflexion in Abhängigkeit von dem Material der Materialoberfläche erreicht wird. Lediglich die Polarisationsrichtung der beiden Strahlungen wird für die jeweilige Strahlungsrichtung variiert, um in den aufgenommenen Messdaten die beiden Strahlungsrichtungen identifizieren zu können.

Es ist daher vorteilhaft und zu bevorzugen, wenn die Wellenlänge sowohl der ersten elektromagnetischen Strahlung als auch der mindestens zweiten elektromagnetischen Strahlung im Wesentlichen identisch sind (innerhalb technisch bedingter Toleranzen). Es ist auch besonders vorteilhaft, wenn die Wellenlänge für die erste elektromagnetische Strahlung und die zweite elektromagnetische Strahlung in Abhängigkeit von dem Material der Materialoberfläche und/oder dem Reflexionsverhalten bzw. einer Reflexionseigenschaft ausgewählt und/oder eingestellt wird.

Gemäß einer vorteilhaften Ausführungsform ist vorgesehen, dass die elektromagnetischen Strahlungen im Wellenlängenspektrum des sichtbaren Lichtes, im Wellenlängenspektrum der Ultraviolettstrahlung und/oder im Wellenlängenspektrum der Infrarotstrahlung emittiert wird. So hatte sich als vorteilhaft herausgestellt, wenn eine Fasermaterialoberfläche, die aus Kunststofffasern besteht, mit weißem Licht bestrahlt wird.

Selbstverständlich kann vorgesehen sein, dass mehr als zwei elektromagnetische Strahlungen durch mehr als zwei elektromagnetische Strahlungsquellen aus jeweils unterschiedlichen Strahlungsrichtungen in Richtung der Materialoberfläche und mit jeweils unterschiedlichen Polarisationen emittiert werden. Die Anzahl der Strahlungsquellen kann dabei in Abhängigkeit von einer gewünschten Fehlererkennungsgenauigkeit und/oder den zu detektieren den Oberflächenfehlern ausgewählt werden.

Die Aufnahmesensorik zum Erfassen der von der Materialoberfläche reflektierten Strahlung weist mindestens eine polarisations-richtungssensitiven Sensor auf. Vorteilhaft ist jedoch, wenn für jede Strahlungsquelle und ihre individuelle Polarisation der emittierten Strahlung jeweils ein polarisationssensitiver Sensor vorgesehen ist. Jedes dieser polarisationssensitiven Sensoren generiert dabei polarisationsabhängige Messdaten, die dann der Auswerteeinheit zugeführt werden.

Dabei ist es denkbar, dass mittels der Auswerteeinheit die basierend auf der reflektierten Strahlung der ersten elektromagnetischen Strahlung generierten ersten Messdaten mit den basierend auf der reflektierten Strahlung der zweiten elektromagnetischen Strahlung generierten zweiten Messdaten zu einem gemeinsamen Messdatenbild zusammengefügt werden, wobei mittels der Auswerteeinheit das gemeinsame Messdatenbild zum Erkennen von Oberflächenfehler der Materialoberfläche analysiert wird. Die Auswerteeinheit ist demzufolge so eingerichtet, dass sie Oberflächenfehler der Materialoberfläche in Abhängigkeit von dem gemeinsamen Messdatenbild bzw. aus dem gemeinsamen Messdatenbild ermitteln kann.

In einer weiteren Ausführungsform kann vorgesehen sein, dass die Strahlungsrichtung einer elektromagnetischen Strahlung während des erfassen der von der Materialoberfläche reflektierten Strahlung durch die Aufnahmesensorik verändert wird, indem beispielsweise die betreffende Strahlungsquelle gegenüber der Aufnahmesensorik und/oder gegenüber der Materialoberfläche derart verändert wird, dass der Strahlungswinkel auf der Materialoberfläche verändert bzw. variiert wird.

Wie bereits angedeutet, eignet sich das erfindungsgemäße Verfahren zum Erkennen von Oberflächenfehler einer Fasermaterialoberfläche eines Fasermaterials, das auf einem Werkzeug zur Herstellung eines Faserverbundbauteils abgelegt wurde. Dies betrifft sowohl trockene als auch vorimprägnierte Fasermaterialien.

Darüber hinaus hatte sich als vorteilhaft herausgestellt, wenn das untersuchen der Fasermaterialoberfläche mittels des erfindungsgemäßen Verfahrens im Nachlauf einer Faserablage von Fasermaterial auf dem Werkzeug mittels einer Faserlegeanlage durchgeführt wird. Es hat sich nämlich gezeigt, dass das erfindungsgemäße Verfahren während des automatisierten kontinuierlichen Ablegens von Fasermaterial auf einer Werkzeugoberfläche durchführbar ist, um Legefehler bei der Faserablage während des Ablegens der Fasern detektieren zu können.

Die Aufgabe wird im Übrigen auch mit dem Verfahren zur automatisierten Faserablage von Fasermaterial eines Faserverbundwerkstoffes mittels einer Faserlegeanlage gemäß Anspruch 7 gelöst, wobei während des Legens des Fasermaterials oder nach dem vollständigen Ablegen einer einzelnen Faserlage das vorstehend beschriebene Verfahren zum Erkennen von Oberflächenfehlern auf der Fasermaterialoberfläche durchgeführt wird.

Die Aufgabe wird im Übrigen auch mit der Vorrichtung zum Erkennen von geometrischen Oberflächenfehlern einer Materialoberfläche, insbesondere einer Fasermaterialoberfläche, gemäß Anspruch 8 erfindungsgemäß gelöst, wobei die Vorrichtung hierfür aufweist:
- erste elektromagnetische Strahlungsquelle, die zum Emittieren einer ersten elektromagnetischen Strahlung aus einer ersten Strahlungsrichtung in Richtung der Materialoberfläche ausgebildet ist,
- mindestens eine weitere zweite elektromagnetische Strahlungsquelle, die zum Emittieren einer zweiten elektromagnetischen Strahlung aus einer von der ersten Strahlungsrichtung verschiedenen Strahlungsrichtung in Richtung der Materialoberfläche ausgebildet ist,
- wobei die Strahlungsquellen zum Polarisieren der jeweils emittierten elektromagnetischen Strahlung derart eingerichtet sind, dass sich die Polarisation der elektromagnetischen Strahlungen voneinander unterscheiden,
- eine Aufnahmesensorik, die zum Erfassen der von der Materialoberfläche reflektierten Strahlungen der ersten und der wenigstens zweiten elektromagnetischen Strahlung und zum Generieren von polarisationsabhängigen Messdaten in Abhängigkeit von den erfassten reflektierten Strahlungen eingerichtet ist, und
- eine Auswerteeinheit, die zum Analysieren der polarisationsabhängigen Messdaten und zum Erkennen eines geometrischen Oberflächenfehlers der Materialoberfläche in Abhängigkeit von den generierten Messdaten eingerichtet ist.

Vorteilhafte Ausgestaltungen der Erfindung finden sich in den entsprechenden Unteransprüchen der Vorrichtung. Die Vorrichtung ist dabei insbesondere derart eingerichtet, dass sie das erfindungsgemäße Verfahren zum Erkennen von geometrischen Oberflächenfehlern einer Materialoberfläche durchführen kann.

Darüber hinaus wird die Aufgabe auch mit einer Faserlegeanlage zum Ablegen von Fasermaterial eines Faserverbundwerkstoffes zur Herstellung eines Faserverbundbauteils gemäß Anspruch 13 erfindungsgemäß gelöst, wobei die Faserlegeanlage mindestens einem Faserlegekopf aufweist, der als Endeffektor an einem Roboter angeordnet ist und zum Ablegen von dem Faserlegekopf zugeführten Fasermaterial auf einem Werkzeug eingerichtet ist. Die Faserlegeanlage weist dabei eine Vorrichtung zum Erkennen von geometrischen Oberflächenfehlern der Materialoberfläche, wie vorstehend beschrieben, auf.

Dabei kann vorteilhafterweise vorgesehen sein, dass zumindest die Aufnahmesensorik der Vorrichtung zum Erkennen von geometrischen Oberflächenfehlern an dem Faserlegekopf im Nachlauf angeordnet ist. Damit können die aktuell abgelegten Fasermaterialien, die von dem Faserlegekopf als letztes abgelegt wurden, kontinuierlich und sofort analysiert werden.

Die Strahlungsquellen können dabei ebenfalls an dem Faserlegekopf angeordnet sein. Denkbar ist hier aber auch, dass die Strahlungsquellen unveränderbar in Bezug auf das Werkzeug angeordnet sind.

Denkbar ist auch, dass mithilfe eines Roboters, an dessen Ende als Endeffektor die Aufnahmesensorik der Vorrichtung angeordnet ist, eine abgelegte Faserlage untersucht wird, indem mithilfe des Roboters die Aufnahmesensorik gegenüber der Faserlage verfahren wird. Hierzu weist die Vorrichtung einen solchen entsprechenden Roboter auf. Auch hierbei können die Strahlungsquellen an dem Endeffektor des Roboters angeordnet sein oder gegenüber dem Werkzeug bzw. der Faserlage unveränderbar angeordnet sein.

Die Erfindung wird anhand der beigefügten Figur beispielhaft näher erläutert. Es zeigt:

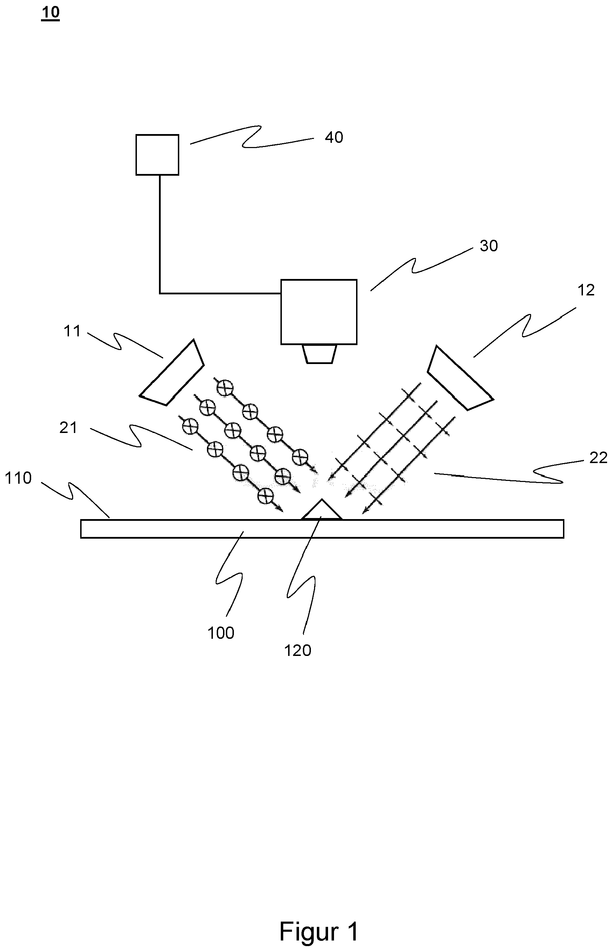

- Figur 1: schematische Darstellung der erfindungsgemäßen Vorrichtung zur Durchführung des Verfahrens.

Figur 1 zeigt in einer schematisch stark vereinfachten Darstellung die erfindungsgemäße Vorrichtung 10 zur Durchführung des Verfahrens zum Erkennen von geometrischen Oberflächenfehlern einer Materialoberfläche im Anwendungsfall der Fasermaterialablage. Mithilfe der Vorrichtung 10 soll dabei eine Faserlage 100 einer nicht näher dargestellten Faserablage untersucht werden, indem mithilfe der Vorrichtung 10 die Fasermaterialoberfläche 110 der Faserlage 100 erfasst wird. Auf der Fasermaterialoberfläche 110 befindet sich beispielhaft ein generischer Oberflächenfehler 120, der mithilfe der erfindungsgemäßen Vorrichtung 10 detektiert werden soll.

Die Vorrichtung 10 weist hierfür eine erste elektromagnetische Strahlungsquelle 11 sowie eine zweite elektromagnetische Strahlungsquelle 12 auf. Beide Strahlungsquellen 11 und 12 sind dabei so angeordnet, dass sie die Fasermaterialoberfläche 110 der zu untersuchenden Faserlage 100 aus jeweils unterschiedlichen Betrachtungswinkel bzw. Strahlungswinkel bestrahlen. Im Ausführungsbeispiel der Figur 1 können die beiden elektromagnetischen Strahlungsquellen 11 und 12 eine Strahlung in Richtung der zu untersuchenden Fasermaterialoberfläche 110 emittieren, die im Wellenlängenspektrum des weißen Lichtes liegt.

Die von der ersten elektromagnetischen Strahlungsquelle 11 ausgesendet der erste elektromagnetische Strahlung 21 weist dabei eine Strahlungsrichtung auf, die von der Strahlungsrichtung der zweiten elektromagnetischen Strahlung 22 emittiert von der zweiten elektromagnetischen Strahlungsquelle 12 verschieden ist. Im Ausführungsbeispiel der Figur 1 sind die beiden Strahlungsquellen 11 und 12 so ausgerichtet, dass die erste elektromagnetische Strahlung 21 eine Strahlungsrichtung hat, die in Bezug zu der Fasermaterialoberfläche 110 einen Winkel von 45° hat. Die zweite elektromagnetische Strahlung 22 hingegen liegt in einem Winkel von 90° zu der ersten elektromagnetischen Strahlung 21, sodass die zweite elektromagnetische Strahlung 21 eine Strahlungsrichtung hat, die in Bezug zu der Fasermaterialoberfläche 110 einen Winkel von 135° hat.

Beide Strahlungen 21 und 22 weisen dabei eine voneinander verschiedene Polarisation der emittierten Strahlung auf. Im Ausführungsbeispiel der Figur 1 weist die erste elektromagnetische Strahlung 21 eine um 90° polarisierte Strahlung auf, während die zweite elektromagnetische Strahlung eine um 0° polarisierte Strahlung hat.

Gegenüber der Fasermaterialoberfläche 110 befindet sich eine Polarisationskamera 30, die eine polarisationssensitive Aufnahmesensorik darstellt. Mithilfe der Polarisationskamera 30 kann nun die von der Fasermaterialoberfläche 110 reflektierte Strahlung der ersten Strahlung 21 sowie der zweiten Strahlung 22 aufgenommen werden, wobei aufgrund der unterschiedlichen Polarisation der beiden Strahlungen 21 und 22 die durch die Kamera 30 aufgenommenen Strahlungen der jeweiligen Strahlungsquelle zugeordnet werden können.

Die Polarisationskamera 30 steht signaltechnisch mit einer Auswerteeinheit 40 in Verbindung, der nun die von der Polarisationskamera 30 generierten Messdaten übermittelt werden. Bei den Messdaten kann es sich beispielsweise um ein Messbild handeln. Dieses Messbild bzw. Messbild der können nun mithilfe einer Bildauswertung, die auf der Auswerteeinheit 40 ausgeführt wird, gemäß dem erfindungsgemäßen Verfahren analysiert werden. Aufgrund der unterschiedlichen Bestrahlungswinkel und der jedem Bestrahlungswinkel zugeordneten Polarisation können nun charakteristische Inhomogenitäten auf der Fasermaterialoberfläche 110 in Form von Oberflächenfehlern 120 erkannt werden.

### Bezugszeichenliste

- 10: Vorrichtung/Erfassungsvorrichtung
- 11: erste elektromagnetische Strahlungsquelle
- 12: zweite elektromagnetische Strahlungsquelle
- 21: erste elektromagnetische Strahlung
- 22: zweite elektromagnetische Strahlung
- 30: Polarisationskamera
- 40: Auswerteeinheit
- 100: Faserlage
- 110: Materialoberfläche/Fasermaterialoberfläche
- 120: Oberflächenfehler

## Patentansprüche

1. Verfahren zum Erkennen von geometrischen Oberflächenfehlern (120) einer Materialoberfläche (110), bei dem die Materialoberfläche (110) mittels einer Erfassungsvorrichtung (10) untersucht wird, wobei das Verfahren die folgenden Schritte umfasst:
- Emittieren einer ersten elektromagnetischen Strahlung (21) einer ersten elektromagnetischen Strahlungsquelle (11) der Erfassungsvorrichtung (10) aus einer ersten Strahlungsrichtung in Richtung der Materialoberfläche (110),
- Emittieren wenigstens einer zweiten elektromagnetischen Strahlung (22) einer zweiten elektromagnetischen Strahlungsquelle (12) der Erfassungsvorrichtung (10) aus einer von der ersten Strahlungsrichtung verschiedenen zweiten Strahlungsrichtung in Richtung der Materialoberfläche (110),
- wobei die elektromagnetischen Strahlungen (21, 22) durch ihre jeweilige Strahlungsquelle (11, 12) derart polarisiert werden, dass sich die Polarisation der elektromagnetischen Strahlungen (21, 22) voneinander unterscheiden,
- Erfassen der von der Materialoberfläche (110) reflektierten Strahlungen der ersten und der wenigstens zweiten elektromagnetischen Strahlung (21, 22) mittels einer polarisationssensitiven Aufnahmesensorik der Erfassungsvorrichtung (10) und Generieren von polarisationsabhängigen Messdaten in Abhängigkeit von den erfassten reflektierten Strahlungen, und
- Analysieren der polarisationsabhängigen Messdaten mittels einer Auswerteeinheit (40) der Erfassungsvorrichtung (10), wobei in Abhängigkeit von der Analyse der polarisationsabhängigen Messdaten geometrische Oberflächenfehler (120) der Materialoberfläche (110) erkannt werden.

2. Verfahren nach Anspruch 1, **dadurch gekennzeichnet, dass** durch die jeweilige Strahlungsquelle (11, 12) eine elektromagnetische Strahlung (21, 22) im Wellenlängenspektrum des sichtbaren Lichtes, der Ultraviolettstrahlung und/oder der Infrarotstrahlung emittiert wird.

3. Verfahren nach Anspruch 1 oder 2, **dadurch gekennzeichnet, dass** mehr als zwei elektromagnetische Strahlungen (21, 22) durch mehr als zwei elektromagnetische Strahlungsquellen (11, 12) aus jeweils unterschiedlichen Strahlungsrichtungen in Richtung der Materialoberfläche (110) und mit jeweils unterschiedlichen Polarisationen emittiert werden.

4. Verfahren nach einem der vorhergehenden Ansprüche, **dadurch gekennzeichnet, dass** mittels der Auswerteeinheit (40) die basierend auf der reflektierten Strahlung der ersten elektromagnetischen Strahlung (21) generierten ersten Messdaten mit den basierend auf der reflektierten Strahlung der zweiten elektromagnetischen Strahlung (22) generierten zweiten Messdaten zu einem gemeinsamen Messdatenbild zusammengefügt werden, wobei mittels der Auswerteeinheit (40) das gemeinsame Messdatenbild zum Erkennen von Oberflächenfehler (120) der Materialoberfläche (110) analysiert wird.

5. Verfahren nach einem der vorhergehenden Ansprüche, **dadurch gekennzeichnet, dass** die Materialoberfläche (110) eine Fasermaterialoberfläche eines Fasermaterials ist, das auf einem Werkzeug zur Herstellung eines Faserverbundbauteils abgelegt wurde.

6. Verfahren nach Anspruch 5, **dadurch gekennzeichnet, dass** das Untersuchen der Fasermaterialoberfläche (110) im Nachlauf einer Faserablage von Fasermaterial auf dem Werkzeug mittels einer Faserlegeanlage durchgeführt wird.

7. Verfahren zur automatisierten Faserablage von Fasermaterial eines Faserverbundwerkstoffes auf ein Werkzeug mittels einer Faserlegeanlage, wobei während des Legens des Fasermaterials oder nach dem vollständigen Ablegen einer einzelnen Faserlage (100) das Verfahren zum Erkennen von Oberflächenfehlern (120) auf der Fasermaterialoberfläche gemäß einem der Ansprüche 1 bis 7 durchgeführt wird.

8. Vorrichtung (10) zum Erkennen von geometrischen Oberflächenfehlern (120) einer Materialoberfläche (110) mit:
- einer ersten elektromagnetischen Strahlungsquelle (11), die zum Emittieren einer ersten elektromagnetischen Strahlung (21) aus einer ersten Strahlungsrichtung in Richtung der Materialoberfläche (110) ausgebildet ist,
- mindestens einer weiteren zweiten elektromagnetischen Strahlungsquelle (12), die zum Emittieren einer zweiten elektromagnetischen Strahlung (22) aus einer von der ersten Strahlungsrichtung verschiedenen Strahlungsrichtung in Richtung der Materialoberfläche (110) ausgebildet ist,
- wobei die Strahlungsquellen (11, 12) zum Polarisieren der jeweils emittierten elektromagnetischen Strahlung (21, 22) derart eingerichtet sind, dass sich die Polarisation der elektromagnetischen Strahlungen (21, 22) voneinander unterscheiden,
- einer Aufnahmesensorik, die zum Erfassen der von der Materialoberfläche (110) reflektierten Strahlungen der ersten und der wenigstens zweiten elektromagnetischen Strahlung (21, 22) und zum Generieren von polarisationsabhängigen Messdaten in Abhängigkeit von den erfassten reflektierten Strahlungen eingerichtet ist, und
- einer Auswerteeinheit (40), die zum Analysieren der polarisationsabhängigen Messdaten und zum Erkennen eines geometrischen Oberflächenfehlers (120) der Materialoberfläche (110) in Abhängigkeit von den generierten Messdaten eingerichtet ist.

9. Vorrichtung (10) nach Anspruch 8, **dadurch gekennzeichnet, dass** die Strahlungsquellen (11, 12) zum Emittieren der elektromagnetischen Strahlung (21, 22) im Wellenlängenspektrum des sichtbaren Lichtes, der Ultraviolettstrahlung und/oder der Infrarotstrahlung ausgebildet sind.

10. Vorrichtung (10) nach Anspruch 8 oder 9, **dadurch gekennzeichnet, dass** mehr als zwei elektromagnetische Strahlungsquellen (11, 12) vorgesehen sind, die zum Emittieren von elektromagnetischen Strahlungen (21, 22) aus voneinander verschiedenen Strahlungsrichtungen in Richtung der Materialoberfläche (110) und mit voneinander verschiedenen Polarisationen ausgebildet sind.

11. Vorrichtung (10) nach einem der Ansprüche 8 bis 10, **dadurch gekennzeichnet, dass** die Auswerteeinheit (40) eingerichtet ist, die basierend auf der reflektierten Strahlung der ersten elektromagnetischen Strahlung (21) generierten ersten Messdaten mit den basierend auf der reflektierten Strahlung der zweiten elektromagnetischen Strahlung (22) generierten zweiten Messdaten zu einem gemeinsamen Messdatenbild zusammen zu fügen und das gemeinsame Messdatenbild zum Erkennen von Oberflächenfehler (120) der Materialoberfläche (110) zu analysieren.

12. Vorrichtung (10) nach einem der Ansprüche 8 bis 11, **dadurch gekennzeichnet, dass** die Auswerteeinheit (40) eingerichtet ist, Oberflächenfehler (120) einer Fasermaterialoberfläche (110) eines auf einem Werkzeug abgelegten Fasermaterials zu erkennen.

13. Faserlegeanlage zum Ablegen von Fasermaterial eines Faserverbundwerkstoffes zur Herstellung eines Faserverbundbauteils mit mindestens einem Faserlegekopf, der als Endeffektor an einem Roboter angeordnet und zum Ablegen von dem Faserlegekopf zugeführten Fasermaterial auf einem Werkzeug eingerichtet ist, **dadurch gekennzeichnet, dass** die Faserlegeanlage eine Vorrichtung (10) nach einem der Ansprüche 8 bis 12 hat.

14. Faserlegeanlage nach Anspruch 13, **dadurch gekennzeichnet, dass** zumindest die Aufnahmesensorik der Vorrichtung (10) an dem Faserlegekopf angeordnet ist.
